# EUROPEAN PATENT SPECIFICATION

(11) **EP 0 809 755 B1**
(45) Date of publication and mention of the grant of the patent: **13.10.1999**
(21) Application number: 96902366.2
(22) Date of filing: 15.02.1996
(51) Int. Cl.: F02K 9/97

(54) **THRUST CHAMBERS**
SCHUBROHRE
CHAMBRE DE POUSSEE

(30) Priority: 16.02.1995 GB 9503069
(43) Date of publication of application: 03.12.1997
(73) Proprietor: ARC UK LIMITED, London EC2V 5DB (GB)
(72) Inventor: WOOD, Robert, Stephen, Northants NN13 6AT (GB)
(74) Representative: Ablett, Graham Keith
(86) International application number: GB9600326
(87) International publication number: WO9625595

(56) References cited:
- WO-A-95/33620
- US-A- 4 917 968
- DATABASE NTIS NATIONAL TECHNICAL INFORMATION SERVICE, US DEPARTMENT OF COMMERCE, SPRINGFIELD, VA, US NTIS IDENTIFIER 95025203, September 1993 D. M. JASSOWSKI : "Advanced Small Rocket Chambers. Basic Program and Option 2: Fundamental Processes and Material Evaluation" XP002004047 & NASA - NATIONAL AERONAUTICS AND SPACE ADMINISTRATION, September 1993, WASHINGTON D.C., pages 1-367, D. M. JASSOWSKI: "FINAL REPORT NASA-CR-195349"
- DATABASE NTIS NATIONAL TECHNICAL INFORMATION SERVICE, US DEPARTMENT OF COMMERCE, SPRINGFIELD, VA, US NTIS IDENTIFIER 95062389, June 1995 ELECTROFORMED NICKEL, INC.: "High Temperrature Barrier Coatings for Refractory Metals" XP002004048 & NASA - NATIONAL AERONAUTIC AND SPACE ADMINISTRATION, June 1995, WASHINGTON, pages 1-133, ELECTROFORMED NIKEL, INC. : "CONTRACT REPORT NASA - CR - 195475"
- REVIEW OF SCIENTIFIC INSTRUMENTS, AUG. 1975, USA, vol. 46, no. 8, ISSN 0034-6748, pages 1107-1108, XP002004046 GLAWE G E: "New high-temperature noble-metal thermocouple pairing"

## Description

The present invention relates to thrust chambers for bipropellant liquid rocket engines.

Conventional bipropellant liquid fuel rocket engines have thrust chambers in which fuel and oxidiser arc reacted together. The reaction between the two constituents generates thrust and very high temperatures which may exceed the melting temperature of the material from which the chamber is constructed or cause attack by corrosion of the chamber metal over a period of use.

In order to reduce the peak temperature reached by the chamber wall, the technique of film cooling is frequently employed. In this technique, the two bipropellant constituents are fed into the thrust chamber in a predetermined manner. To generate a combustion reaction, fuel and oxidiser are both fed through a plurality of pairs of jets in an injector into the thrust chamber where they react together to generate thrust. Simultaneously, one constituent, usually the fuel, is fed through a ring of jets adjacent the thrust chamber wall so as to form a thermally insulating film along the chamber wall and separate the burning bipropellant therefrom by a cooler liquid and gaseous layer.

The problem caused by film cooling is that as the distance from the injector jets increases downstream therefrom, the fuel component decomposes into uncombusted but very corrosive species which cause attack by pitting of the combustion chamber wall up to about shortly about before the throat of the nozzle at which point such pitting tends to stop.

The reason for this cessation of attack is that the corrosive species produced by decomposition of the fuel may become fully burnt at this point probably due to the rising temperature which occurs along the length of the chamber.

However, the pitting corrosion problem is very serious in that rocket thrusters used for positioning and spatial adjustment of space vehicles such as satellites, for example, need a relatively long life and pitting corrosion can result in premature failure of the thrust chamber.

A further disadvantage of the technique of film cooling is that it is an inefficient use of the fuel constituent. The ability to reduce or eliminate the quantity of the fuel constituent used in this way would enable an increase in the duration of a satellite, for example, on-station through more of the fuel being available for manoeuvring, or an increase in the launch vehicle payload through the need to carry less fuel or the ability to build smaller, less costly but improved performance thruster motors.

US-A-4 882 904 describes a rocket motor employing a baffle in the thrust chamber to deflect the uncombusted fuel film cooling constituent into the high temperature burning core of fuel and oxidiser before it can decompose to form corrosive species. However, disadvantages of this approach are that cooling of the chamber downstream of the baffle may be inadequate, the presence of the baffle itself impairs motor performance and a consequence of disrupting the film cooling is that more heat is conducted into the rocket engine body causing problems with vapour locks in the propellant supply to the injector and degradation of mechanical components such as plastics material value seats for example.

US-A-4 917 968 seeks to provide a chamber liner by chemical vapour deposition of a corrosion resistant layer such as iridium onto a highly temperature resistant material such as rhenium. Other materials such as refractory oxides of hafnium or zirconium may also be employed as surface layers. However, although the rhenium layer is mechanically very strong at elevated temperatures, it is very susceptible to oxidation. Furthermore, the iridium surface layer exposed to the film cooling fuel layer has been found to be susceptible to grain boundary corrosion by the fuel decomposition products, as described above, causing the loss of surface grains of iridium producing pitting and allowing attack of the underlying rhenium layer.

It is an object of the present invention to provide at least a chamber liner able to withstand the corrosive effects of the decomposition species of the fuel film cooling layer and to withstand the high temperatures of bipropellant combustion.

It is a further objective to improve the performance of thrust chambers.

According to the present invention there is provided a thrust chamber for a liquid propellant rocket engine comprising:
a main structural body member formed from a refractory metal, the main body member including a first zone extending from at least a position where, in use, the production of corrosive species formed by decomposition of a cooling layer of fuel injected along the surface of the thrust chamber begins, to a position where said corrosive species ends;
a second zone, downstream of the first zone, said second zone extending through and beyond a nozzle throat portion into a divergent nozzle portion ;
said refractory metal main body member having a lining or liner of a different metal, the thrust chamber being characterised in that said lining or liner is an alloy comprising a composition in wt% in the range from about 40 rhodium/ 60 iridium to about 60 rhodium/ 40 iridium and in that said lining or liner extends substantially from at least the beginning of said first zone through said second zone throat portion into the divergent nozzle portion.

It is preferred that the first and second zone be provided in the form of linings or liners to a main body or backing layer as refractory alloys used for such applications are well characterised in terms of their mechanical and material properties. Thus, rocket engine thrust chambers according to the present invention may be produced with a greater degree of certainty with regard to materials and may require less resources for testing and certification.

Preferably the rhodium/iridium alloy is in the form of a lining to a backing layer or a liner provided within a backing layer or main body; the backing layer or the main body of the thrust chamber may comprise a refractory metal or metal alloy. Most preferably the liner or backing layer may be produced by fabrication from sheet materials and applied to the inner wall surface of a main body or backing member by employing metal working and joining techniques known in the metallurgical art.

Optionally a lining or liner may be produced by various physical and/or chemical vapour deposition methods. It will occur to the skilled addressee that by using such techniques, the proportionate quantities of rhodium and iridium contained in the alloy can be varied within the stated range across the liner, whilst still providing the same substantial cover and protection of the thrust chamber.

One example of an alloy used with particular advantage for the liner for a thrust chamber according to the present invention includes about 55wt%/ rhodium and about 45wt% iridium.

In order the present invention may be more fully understood, examples will now be described by way of illustration only with reference to the accompanying drawings, of which:
Figure 1 shows a schematic representation of a thrust chamber of a first embodiment of a rocket engine according to the present invention; and
Figure 2 which shows a schematic graph of temperature against position within the thrust chamber of Figure 1.

Referring now to the Figures and where the same features are denoted by common reference numerals.

A schematic cross section of a rocket engine thrust chamber is shown generally at 10. The chamber has an injector 12 at one end of the chamber, the injector having jets 14 in a central region through which bipropellant comprising fuel and oxidiser is introduced for combustion and jets 16 around the outer periphery of the injector for the introduction of a peripheral curtain of fuel alone adjacent the inner wall for the purpose of film cooling of the inside surface 18 of the chamber. The chamber comprises a main body member 20 formed from a refractory metal alloy and a liner 22 bonded to the inner surface 24 of the main body. The liner 22 comprises two principal elements; a first portion 28 extending from adjacent the injector 12 through a parallel portion of the chamber to a region 30 and a second portion 32 which extends through the throat 34 of the chamber to the end of the divergent nozzle 36.

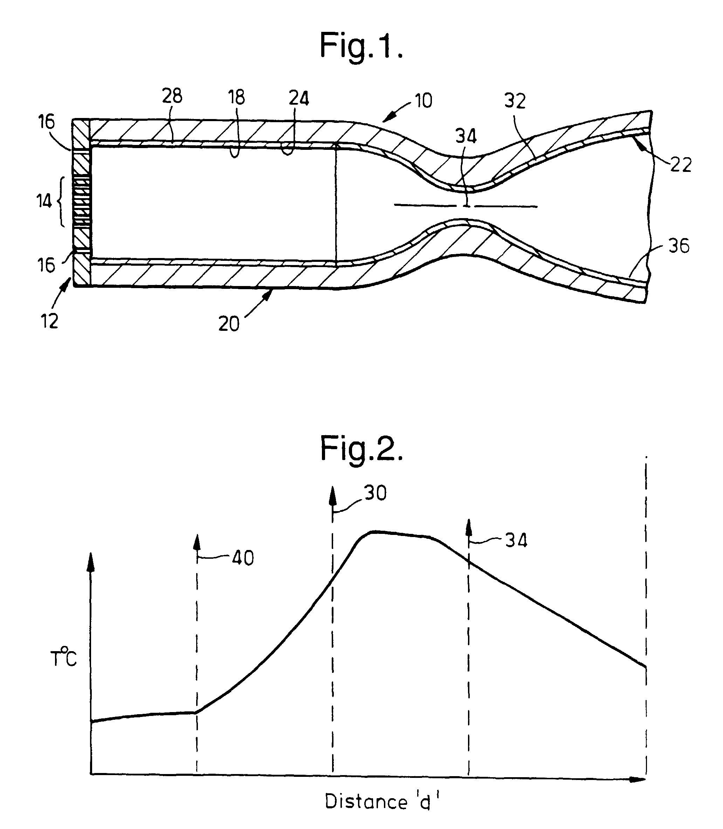

In operation the temperature of the inner wall 18 rises from the injector end towards the nozzle 36 as represented schematically in Figure 2. The temperature of the inner wall is prevented from becoming as hot as would otherwise have been the case by the action of the film cooling of the curtain of raw fuel provided through the injector jets 16. The fuel coolant decomposes under the action of the heat of the combusting bipropellant in the core of the chamber and at a region, indicated by the arrow at 40, a distance downstream of the injector 12, the decomposition species from the fuel begin to attack the iridium liners used in prior art thrust chambers.

In the present invention, the liner 22 is composed entirely of an alloy comprising from about 60wt% rhodium/40wt% iridium to about 40wt% rhodium/60wt% iridium from adjacent the injector 12 to the end of the nozzle 36. The presence of a significant quantity of rhodium from at least the region 40 has been found to prevent such attack of the surface. The corrosive species generated by the coolant fuel decomposition exist in the thrust chamber during operation until about shortly before the region indicated at 30. At this region the temperature has risen significantly, as indicated in Figure 2, but the corrosive species from the decomposed fuel have themselves been combusted due to the higher temperature in this region. In the absence of the corrosive species but under the influence of the higher temperature, the presence of a significant proportion of iridium in the material of the liner from the region 30 downstream thereof, which has a greater temperature capability than rhodium, acts to resist the effects of the higher temperature caused by the bipropellant combustion.

One alloy used with particular advantage for the liner comprises around 55wt% rhodium / 45wt% iridium. The manufacturing procedure is substantially the same as that described with reference to Figure 1.

Alloys comprising rhodium and iridium of the type described have sufficient resistance to attack by the decomposition species of the fuel coolant and adequate thermal resistance to the temperatures reached in use.

## Claims

1. A thrust chamber (10) for a liquid propellant rocket engine, the thrust chamber comprising:
a main structural body member (20) formed from a refractory metal, the main body member including a first zone (28) extending from at least a position (40) where, in use, the production of corrosive species formed by decomposition of a cooling layer of fuel injected along the surface of the thrust chamber begins, to a position (30) where said corrosive species ends;
a second zone (32), downstream of the first zone, said second zone extending through and beyond a nozzle throat portion (34) into a divergent nozzle portion (36);
said refractory metal main body member (20) having a lining or liner (22) of a different metal, the thrust chamber being characterised in that said lining or liner (22) is an alloy comprising a composition in wt% in the range from about 40 rhodium/ 60 iridium to about 60 rhodium/ 40 indium and in that said lining or liner extends substantially from at least the beginning (40) of said first zone through said second zone throat portion (34) into the divergent nozzle portion (36).

2. A thrust chamber according to claim 1 wherein the different metal is a physical or chemical vapour deposited lining on said main body member (20).

3. A thrust chamber according to claim 1 wherein the different metal is a wrought alloy liner applied and joined to said main body member (20) by a metallurgical technique.

4. A thrust chamber according to any one preceding claim wherein the lining or liner has a composition comprising in wt% about 55 rhodium/ 45 iridium.

## Patentansprüche

1. Schubrohr (10) für einen Flüssigkeitsraketenmotor, wobei zu dem Schubrohr gehören:
ein Hauptgehäusebauteil (20) ,das aus einem feuerfesten Material gebildet ist, wobei das Hauptgehäusebauteil eine erste Zone (28) aufweist, die sich von wenigstens einer Stelle (40) ,bei der beim Betrieb die Erzeugung von Korrusionsmitteln beginnt, welche durch Zersetzung einer Kühlschicht des eingespritzten Kraftstoffes längs der Oberfläche der Schubkammer gebildet werden, zu einer Stelle (30) erstreckt, bei der die Korrusionsmittel enden;
eine zweite Zone (32) stromabwärts von der ersten Zone, wobei sich die zweite Zone durch und über einen Düsendrosselabschnitt (34) in einen divergenten Düsenabschnitt (36) erstreckt;
wobei das feuerfeste Hauptgehäusebauteil (20) eine Auskleidung bzw. einen Wärmeschutz (22) aus einem unterschiedlichen Metall aufweist, wobei das Schubrohr dadurch gekennzeichnet ist, daß die Auskleidung bzw. der Wärmeschutz aus einer Legierung besteht, die eine Zusammensetzung in Gewichtsprozent in dem Bereich 40 Rhodium/60 Iridium bis etwa 60 Rhodium/40 Iridium aufweist, und daß die Auskleidung bzw. der Wärmeschutz sich im Wesentlichen von wenigstens dem Anfang (40) der ersten Zone durch den Drosselabschnitt (34) der zweiten Zone in den divergierenden Düsenabschnitt (36) erstreckt.

2. Schubrohr nach Anspruch 1, bei dem das unterschiedliche Material aus einer physikalisch oder chemisch aus der Dampfphase niedergeschlagene Auskleidung auf dem Hauptgehäusebauteil (20) besteht.

3. Schubrohr nach Anspruch 1, bei dem das unterschiedliche Material eine parasite Wärmeschutzlegierung ist, die auf das Hauptgehäusebauteil (20) durch ein metallurgisches Verfahren aufgebracht und mit diesem verbunden ist.

4. Schubrohr nach einem vorangehenden Anspruch, bei dem die Auskleidung bzw. der Wärmeschutz eine Zusammensetzung aufweist, die in Gewichtsprozent etwa 55 Rhodium/45 Iridium besitzt.

## Revendications

1. Chambre de poussée (10) pour moteur de fusée à propergol liquide, la chambre de poussée comportant :
- un élément formant corps principal de structure (20), formé à partir d'un métal réfractaire, l'élément formant corps principal comportant une première zone (28) s'étendant à partir d'au moins une position (40) où, en utilisation, commence la production de composés corrosifs formés par la décomposition d'une couche de refroidissement constituée d'un combustible injecté le long de la surface de la chambre de poussée, jusqu'à une position (30) où se terminent lesdits composés corrosifs,
- une seconde zone (32), en aval de la première zone, ladite seconde zone s'étendant à travers une partie formant col de tuyère (34) et au-delà jusqu'à l'intérieur d'une partie formant tuyère divergente (36),
- ledit élément formant corps principal (20) en métal réfractaire ayant un revêtement ou chemise (22) constitué d'un métal différent, la chambre de poussée étant caractérisée en ce que ledit revêtement ou chemise (22) est un alliage constitué d'une composition en poids située dans la plage allant d'environ 40 % de rhodium/60% d'iridium jusqu'à environ 60 % de rhodium/40 % d'iridium, et en ce que ledit revêtement ou chemise s'étend sensiblement à partir au moins du début (40) de ladite première zone à travers ladite partie formant col (34) de la seconde zone jusqu'à l'intérieur de la partie formant tuyère divergente (36).

2. Chambre de poussée selon la revendication 1, dans laquelle le métal différent est un revêtement par dépôt physique ou chimique en phase vapeur sur ledit élément formant corps principal (20).

3. Chambre de poussée selon la revendication 1, dans laquelle le métal différent est un revêtement d'alliage de corroyage appliqué sur ledit élément formant corps principal (20) et joint à celui-ci par une technique métallurgique.

4. Chambre de poussée selon l'une quelconque des revendications précédentes, dans laquelle le revêtement ou chemise a une composition constituée en poids d'environ 55 % de rhodium/45 % d'iridium.
